# EUROPÄISCHE PATENTSCHRIFT

(11) **EP 1 805 385 B1**
(45) Veröffentlichungstag und Bekanntmachung des Hinweises auf die Patenterteilung: **10.08.2011**
(21) Anmeldenummer: 05787395.2
(22) Anmeldetag: 12.09.2005
(51) Int. Cl.: E05F 15/18

(54) **SCHIEBETÜR MIT EINEM ANTRIEBSSYSTEM MIT EINER MAGNETREIHE**
SLIDING DOOR WITH A DRIVE SYSTEM COMPRISING A SERIES OF MAGNETS
PORTE COULISSANTE POURVUE D'UN SYSTEME D'ENTRAINEMENT COMPRENANT UNE SERIE D'AIMANTS

(30) Priorität: 17.10.2004 DE 102004050326
(43) Veröffentlichungstag der Anmeldung: 11.07.2007
(73) Patentinhaber: Dorma GmbH + Co. KG, 58256 Ennepetal (DE)
(72) Erfinder: BUSCH, Sven, 44139 Dortmund (DE)
(86) Internationale Anmeldenummer: PCT/EP2005/009773
(87) Internationale Veröffentlichungsnummer: WO 2006/039973

(56) Entgegenhaltungen:
- US-A- 4 870 306
- PATENT ABSTRACTS OF JAPAN Bd. 2003, Nr. 12, 5. Dezember 2003 (2003-12-05) & JP 2003 244928 A (TOYOTA AUTO BODY CO LTD), 29. August 2003 (2003-08-29)
- PATENT ABSTRACTS OF JAPAN Bd. 017, Nr. 686 (M-1529), 15. Dezember 1993 (1993-12-15) & JP 05 231068 A (FUJI ELECTRIC CO LTD), 7. September 1993 (1993-09-07)

## Beschreibung

Die Erfindung betrifft eine Schiebetür mit einem magnetischen Antriebssystem für mindestens einen Türflügel, mit einer Linear-Antriebseinheit mit mindestens einer Magnetreihe. Der Begriff der Magnetreihe umfasst auch längliche Einzelmagneten. Die Magnetreihe kann ortsfest oder ortsveränderlich angeordnet sein.

Aus der DE 40 16 948 A1 ist eine Schiebetürführung bekannt, bei der miteinander zusammenwirkende Magnete bei normaler Belastung eine berührungsfreie schwebende Führung eines in einer Schiebeführung gehaltenen Türflügels oder dergleichen bewirken, wobei neben den stationär angeordneten Magneten der Schiebeführung ein Ständer eines Linearmotors angeordnet ist, dessen Läufer an der Schiebetür angeordnet ist. Durch die gewählte V-förmige Anordnung der Permanentmagnete der offenbarten permanent erregten magnetischen Trageinrichtung kann keine seitlich stabile Führungsbahn realisiert werden, weswegen eine relativ komplizierte Anordnung und Ausgestaltung von Ständer und Läufer erforderlich ist. Diese Anordnung verteuert eine solche Schiebetür enorm.

Aus der WO 00/50719 A1 ist ein kombiniertes Lager- und Antriebssystem für eine automatisch betriebene Tür bekannt, bei der ein permanent erregtes magnetisches Tragsystem symmetrisch aufgebaut ist und ortsfeste und ortsveränderbare Magnetreihen aufweist, die jeweils in einer Ebene angeordnet sind, wobei sich das Tragsystem in einem labilen Gleichgewicht befindet und bei dem das Tragsystem symmetrisch angeordnete seitliche Führungselemente aufweist, die rollenförmig gelagert sein können. Aufgrund der hierdurch erreichten seitlich stabilen Führungsbahn ergibt sich eine einfache Ausgestaltung und Anordnung von Ständer und Läufer eines in einem gemeinsamen Gehäuse untergebrachten Linearmotors, nämlich die Möglichkeit, Ständer und Läufer des Linearmotors in Bezug auf das Tragsystem beliebig anordnen zu können und hinsichtlich der Formgebung von Ständer und Läufer nicht durch das Tragsystem beschränkt zu sein.

Diesen beiden Lagersystemen gemeinsam ist, dass sie nach dem Prinzip der abstoßenden Kraftwirkung arbeiten, welches Wirkprinzip einen stabilen Schwebezustand ohne aufwendige elektrische Regeleinrichtung ermöglicht. Nachteilig hieran ist jedoch, dass sowohl mindestens eine ortsfeste als auch mindestens eine ortsveränderbare Magnetreihe vorhanden sein muss, d. h. über den gesamten Weg der Schiebeführung bzw. des Lagers der automatisch betriebenen Tür und an dem entlang dieser Führung beweglichen Tragschlitten für die Tür Magnete angeordnet sein müssen, wodurch sich ein solches System, das sich aufgrund des Wegfalls der mechanischen Reibung zum Tragen der Tür durch extreme Leichtgängigkeit und geräuschlose Arbeitsweise auszeichnet und nahezu verschleiß- und wartungsfrei ist, in der Herstellung sehr teuer wird.

Aus der DE 196 18 518 C1 ist weiter ein elektromagnetisches Antriebssystem für magnetische Schwebe- und Tragsysteme bekannt, bei dem durch eine geeignete Anordnung von Dauermagnet und ferromagnetischem Material ein stabiler Schwebe- und Tragzustand erreicht wird. Hierzu versetzt der Dauermagnet das ferromagnetische Material in den Zustand einer magnetischen Teilsättigung. Elektromagnete sind so angeordnet, dass die Dauermagnete allein durch eine Änderung der Sättigung in der Tragschiene bewegt werden und die Spulenkerne sind in die dauermagnetische Teilsättigung, die zum Schwebe- und Tragezustand führt, mit einbezogen.

Weiter zeigt die WO 94/13055 einen Ständerantrieb für einen elektrischen Linearantrieb und eine mit einem solchen Ständer versehene Tür, die mittels Magneten im Türsturz eines Rahmens aufgehängt ist. Hierfür sind an der Türfüllung mehrere Magnete oder Magnetgruppen angeordnet, deren magnetische Feldstärke so groß ist, dass eine Anziehungskraft zu einer Führungsplatte erreicht wird, die an der Unterseite des Türsturzes angeordnet ist, wobei die Anziehungskraft ausreicht, um das Gewicht der Türfüllung anzuheben.

Bei allen diesen Systemen müssen aufgrund der gewählten Anordnungen des magnetischen Antriebes aufwendige Regelungssysteme zur Regelung der gewünschten Geschwindigkeit und Schubkraft des Türflügels vorgesehen werden, wodurch eine solche Schiebetür in der Herstellung sehr teuer wird.

Die JP 2003244928 offenbart alle Merkmale des Oberbegriffs des Anspruchs 1.

Es ist daher die Aufgabe der Erfindung, eine Schiebetür mit einem magnetischen Antriebssystem für mindestens einen Türflügel, das eine Linear-Antriebseinheit mit mindestens einer Magnetreihe aufweist, so weiterzuentwickeln, dass die zuvor genannten Vorteile bei geringen Herstellungskosten bestehen bleiben und insbesondere eine Regelung der gewünschten Geschwindigkeit und Schubkraft vereinfacht wird.

Gelöst wird diese Aufgabe mit den im Patentanspruch 1 angegebenen Merkmalen. Vorteilhafte Ausgestaltungen des Gegenstandes des Patentanspruches 1 sind in den Unteransprüchen angegeben.

Die erfindungsgemäße Schiebetür mit einem magnetischen Antriebssystem für mindestens einen Türflügel, mit einer Linear-Antriebseinheit, die mindestens eine in Antriebsrichtung ortsveränderlich angeordnete Magnetreihe, deren Magnetisierung in ihrer Längsrichtung in bestimmten Abständen das Vorzeichen wechselt und mindestens eine aus mehreren Einzelspulen bestehende ortsfeste Spulenanordnung aufweist, die bei entsprechender Ansteuerung der Einzelspulen eine Wechselwirkung mit der mindestens einen Magnetreihe bewirkt, die Vorschubkräfte hervorruft, wobei die ortsfeste Spulenanordnung über weniger als 90 % einer Länge eines Verfahrweges der Schiebetür angeordnet ist, weist gegenüber dem Stand der Technik den Vorteil auf, dass die Geschwindigkeit und Schubkraft des Türflügels durch die Anordnung der Spulenanordnung an sich bestimmbar ist. Erfindungsgemäß kann durch gezieltes Weglassen von der Spulenanordnung über wenigstens 10 % des Verfahrweges gezielt die aufgebrachte Schubkraft und damit die erzielte Geschwindigkeit verringert werden, wodurch eine aufwendige Regelung der Geschwindigkeit, z. B. langsames Anfahren, schnelles Verfahren und langsames Anhalten des Türflügels, überflüssig wird. Die ortsfeste Spulenanordnung ist erfindungsgemäß in wenigstens zwei Gruppen von Einzelspulen unterteilt, die symmetrisch zu der Mitte des Verfahrweges der Schiebetür angeordnet sind. Durch eine solche Aufteilung der Spulenanordnung kann leicht eine Anpassung der erfindungsgemäßen Schiebetür an unterschiedliche Türflügelbreiten erfolgen, da einfach mehr oder weniger Gruppen von Einzelspulen vorgesehen werden können. Weiter kann auch leicht eine Anpassung an unterschiedlich schwere Türflügel erfolgen, die mehr oder weniger aufgebrachte Schubkräfte benötigen, um eine bestimmte gewünschte Geschwindigkeit zu erreichen. Dabei ist ein Abstand zwischen zwei Gruppen von Einzelspulen so gewählt, dass der Anfang der Magnetreihe bei ihrem Verfahren dann einer ersten Einzelspule einer in Bewegungsrichtung noch zu durchfahrenden Gruppe von Einzelspulen gegenübersteht, wenn das Ende der Magnetreihe einer letzten Einzelspule einer in Bewegungsrichtung nicht mehr zu durchfahrenden Gruppe von Einzelspulen gegenübersteht. Auf diese Weise wird eine konstant auf die mindestens eine Magnetreihe wirkende Schubkraft erreicht.

Die Anordnung der Spulenanordnung und ihre Aufteilung in Gruppen von Einzelspulen wird vorzugsweise abhängig von einem gewünschten Schubkraftverlauf bestimmt, mit dem der Türflügel verfahren werden soll.

Alternativ oder zusätzlich ist vorzugsweise die ortsfeste Spulenanordnung am Anfang und am Ende des Verfahrweges der Schiebetür nicht angeordnet. Diese Anordnung führt zu einem Geschwindigkeitsverlauf, bei dem der Türflügel langsamer anfährt und anhält. Aufgrund der Symmetrie ist dieser Geschwindigkeitsverlauf sowohl beim Öffnen als auch beim Schießen gegeben.

Weiter alternativ oder zusätzlich ist nach der Erfindung vorzugsweise die ortsfeste Spulenanordnung in der Mitte des Verfahrweges der Schiebetür angeordnet. Diese Anordnung führt zu einem Geschwindigkeitsverlauf, bei dem der Türflügel in der Mitte des Verfahrweges eine konstante Geschwindigkeit aufweist, zumindest, wenn die Spulenanordnung länger als eine mit dem Türflügel verbundene wenigstens eine Magnetreihe ist.

Weiter weist die Schiebetür vorzugsweise alternativ oder zusätzlich über den gesamten Verfahrweg angeordnete Spulenkerne auf. Dieses Merkmal führt zu einem gleichförmigen Rastkraftverlauf über den gesamten Verfahrweg. Weiter werden die Trageigenschaften eines kombinierten Trag- und Antriebssystemes, das die Spulenkerne als Tragelemente oder zusätzliche Tragelemente vorsieht, nicht negativ beeinflusst. Dieses Vorsehen von nicht mit Spulen versehenen Spulenkernen beeinflusst die eingestellten Geschwindigkeiten und Schubkräfte nicht.

Der Verfahrweg entspricht vorzugsweise der doppelten Türflügelbreite.

Weiter ist vorzugsweise die ortsfeste Spulenanordnung über weniger als 80 %, noch weiter vorzugsweise weniger als 75 %, einer Länge eines Verfahrweges der Schiebetür angeordnet.

Die mindestens eine Magnetreihe besteht vorzugsweise aus einem oder mehreren Hochleistungsmagneten, vorzugsweise Seltenerden-Hochleistungsmagneten, weiter vorzugsweise aus Neodym-Eisen-Bor (NeFeB) bzw. Samarium-Cobalt (Sm₂Co) oder kunststoffgebundenen Magnetwerkstoffen. Durch die Verwendung von solchen Hochleistungsmagneten lassen sich wegen der höheren Remanenzinduktion wesentlich höhere Kraftdichten erzeugen als mit Ferrit-Magneten. Demzufolge lässt sich das Magnetsystem bei gegebener Tragkraft mit Hochleistungsmagneten geometrisch klein und damit platzsparend aufbauen. Die gegenüber Ferrit-Magneten höheren Materialkosten der Hochleistungsmagnete werden durch das vergleichsweise geringe Magnetvolumen zumindest kompensiert.

Bei der Schiebetür sind vorzugsweise die Spulenanordnung ortsfest und die mindestens eine Magnetreihe ortsveränderlich angeordnet, wodurch die Herstellungskosten durch einen passiv ausführbaren Türflügel gesenkt werden.

Das Antriebssystem oder kombinierte Trag- und Antriebssystem wird zum Antrieb mindestens eines Türflügels einer Schiebetür eingesetzt, die vorzugsweise als Bogenschiebetür oder Horizontal-Schiebewand ausgebildet ist. Es kann neben diesem Einsatz auch zum Antrieb von Torflügeln oder in Zuführeinrichtungen, Handlingseinrichtungen oder Transportsystemen eingesetzt werden.

Die Erfindung wird nun anhand von schematisch dargestellten Ausführungsbeispielen näher beschrieben.

Dabei zeigen:
- Figur 1:: einen Querschnitt einer ersten bevorzugten Ausführungsform der erfindungsgemäß bevorzugt verwendeten magnetischen Trageinrichtung in verschiedenen Belastungszuständen,
- Figur 2:: die Tragkraftkennlinie der magnetischen Trageinrichtung nach der in Figur 1 gezeigten ersten bevorzugten Ausfüh- rungsform,
- Figur 3:: den Querkraftverlauf der magnetischen Trageinrichtung nach der in Figur 1 gezeigten ersten bevorzugten Ausführungs- form,
- Figur 4:: eine Schnittdarstellung einer Draufsicht der magnetischen Trageinrichtung nach der in Figur 1 gezeigten ersten bevor- zugten Ausführungsform,
- Figur 5:: eine Schnittdarstellung einer Draufsicht der ersten bevorzug- ten Ausführungsform des erfindungsgemäß bevorzugt ver- wendeten kombinierten Trag- und Antriebssystemes,
- Figur 6:: eine elektrische Verschaltung der Spulen der Linear- Antriebseinheit des in Figur 5 gezeigten kombinierten Trag- und Antriebssystemes,
- Figur 7:: ein Diagramm zur Erläuterung einer ersten Möglichkeit des Spannungsverlaufes an den wie in Figur 6 gezeigt verschal- teten Spulen der ersten bevorzugten Ausführungsform des erfindungsgemäßen Antriebssystemes,
- Figur 8:: ein Diagramm zur Erläuterung einer zweiten Möglichkeit des Spannungsverlaufes an den wie in Figur 6 gezeigt verschal- teten Spulen der ersten bevorzugten Ausführungsform des erfindungsgemäßen Antriebssystemes,
- Figur 9:: ein Diagramm zur Erläuterung einer dritten Möglichkeit des Spannungsverlaufes an den wie in Figur 6 gezeigt verschal- teten Spulen der ersten bevorzugten Ausführungsform des erfindungsgemäßen Antriebssystemes,
- Figur 10:: eine Anordnung einer Spulenanordnung bei einer Schiebetür nach dem Stand der Technik,
- Figur 11:: eine Anordnung einer Spulenanordnung bei einer Schiebetür nach einer ersten bevorzugten Ausführungsform nach der Erfindung,
- Figur 12:: eine Anordnung einer Spulenanordnung bei einer Schiebetür nach einer zweiten bevorzugten Ausführungsform nach der Erfindung,
- Figur 13:: eine Anordnung einer Spulenanordnung bei einer Schiebetür nach einer dritten bevorzugten Ausführungsform nach der Erfindung,
- Figur 14:: eine Anordnung einer Spulenanordnung bei einer Schiebetür nach einer vierten bevorzugten Ausführungsform nach der Erfindung und
- Figur 15:: eine Anordnung einer Spulenanordnung bei einer Schiebetür nach einer fünften bevorzugten Ausführungsform nach der Erfindung.

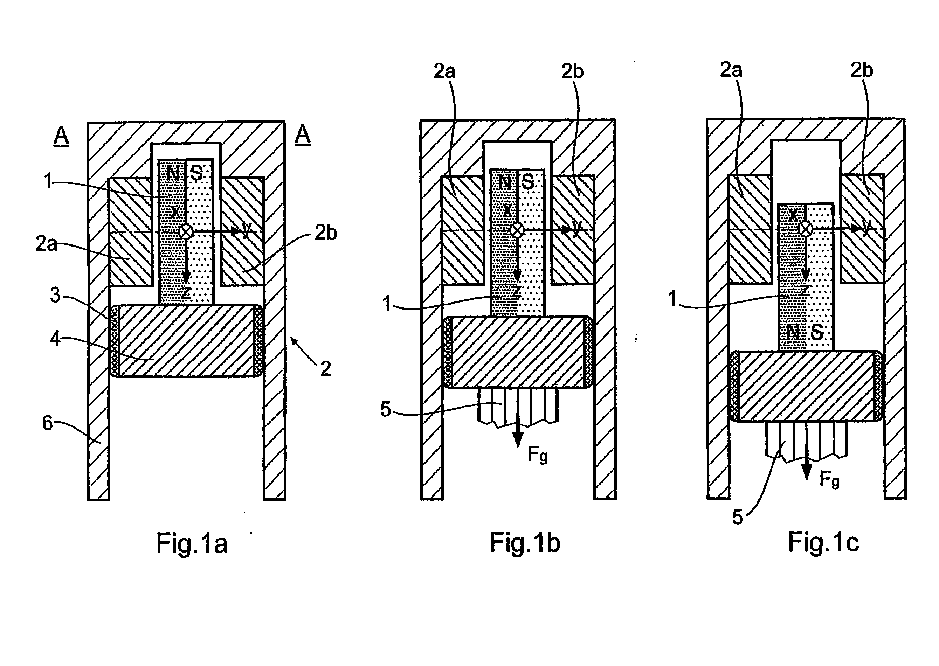

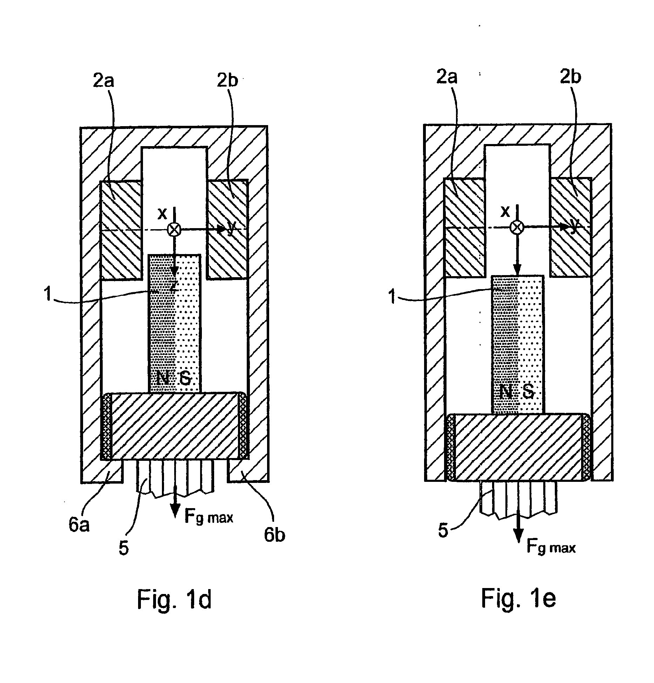

Die Figur 1 zeigt eine schematische Prinzipdarstellung einer ersten bevorzugten Ausführungsform der erfindungsgemäß bevorzugt verwendeten magnetischen Trageinrichtung im Querschnitt. Zur Erläuterung ist ein Koordinatensystem eingezeichnet, bei dem eine x-Richtung eine Fahrtrichtung eines an der erfindungsgemäßen Trageinrichtung aufgehängten Türflügels 5 darstellt. Die Richtung der auf die magnetische Trageinrichtung wirkenden Querkräfte ist die y-Richtung und die durch das Gewicht der aufgehängten Türflügel 5 bedingte vertikale Magnetauslenkung nach unten ist in z-Richtung eingezeichnet.

Eine an einem Tragschlitten 4 befestigte Magnetreihe 1 wird durch ein an dem Tragschlitten 4 vorgesehenes mechanisches Führungselement 3, das mit einem Gehäuse 6 der Trageinrichtung zusammenwirkt, in horizontaler Richtung zentriert zwischen weichmagnetischen Tragschienen 2a, 2b, die das Tragelement 2 bilden, zwangsgeführt, während sie in vertikaler Richtung und in Fahrtrichtung (x) des Türflügels 5 frei verschiebbar ist. Durch die so erzwungene Symmetrie heben sich die in y-Richtung an den Magneten 1 a, 1 b, 1 c, 1 d angreifenden Querkräfte weitgehend auf. In vertikaler Richtung (z-Richtung) nehmen die Magnete 1a, 1b, 1c, 1d nur im lastfreien Zustand, also ohne an dem Tragschlitten 4 befestigte Last, wie in der Figur 1 a gezeigt, eine symmetrische Lage ein.

Bei Belastung der Magnete 1 a, 1b, 1 c, 1 d mit einer Gewichtskraft F_{g}, z. B. durch den an dem Tragschlitten 4 befestigten Türflügel 5, werden diese in vertikaler Richtung aus der in Figur 1a) gezeigten symmetrischen Lage über einen in Figur 1b) gezeigten Zwischenzustand in eine in Figur 1c) gezeigte Gleichgewichtslage bewegt, die durch die zu tragende Gewichtskraft F_{g} und eine magnetische Rückstellkraft zwischen den Magneten 1a, 1b, 1c, 1d der Magnetreihe 1 und den Tragschienen 2a, 2b des Tragelementes 2, im Folgenden auch als Tragkraft F(z) bezeichnet, bestimmt ist. Die Ursache dieser Rückstellkraft sind die zwischen den Magneten 1a, 1b, 1c, 1d der Magnetreihe 1 und den Tragschienen 2a, 2b wirkenden magnetischen Anziehungskräfte, wobei nur der Teil der Magnete 1a, 1b, 1c, 1d, der zwischen den Tragschienen 2a, 2b nach unten heraustritt, zu dieser magnetischen Tragkraft beiträgt. Da dieser Teil mit größer werdender vertikaler Auslenkung zunimmt, steigt die magnetische Tragkraft dem Betrag nach kontinuierlich mit der Auslenkung an.

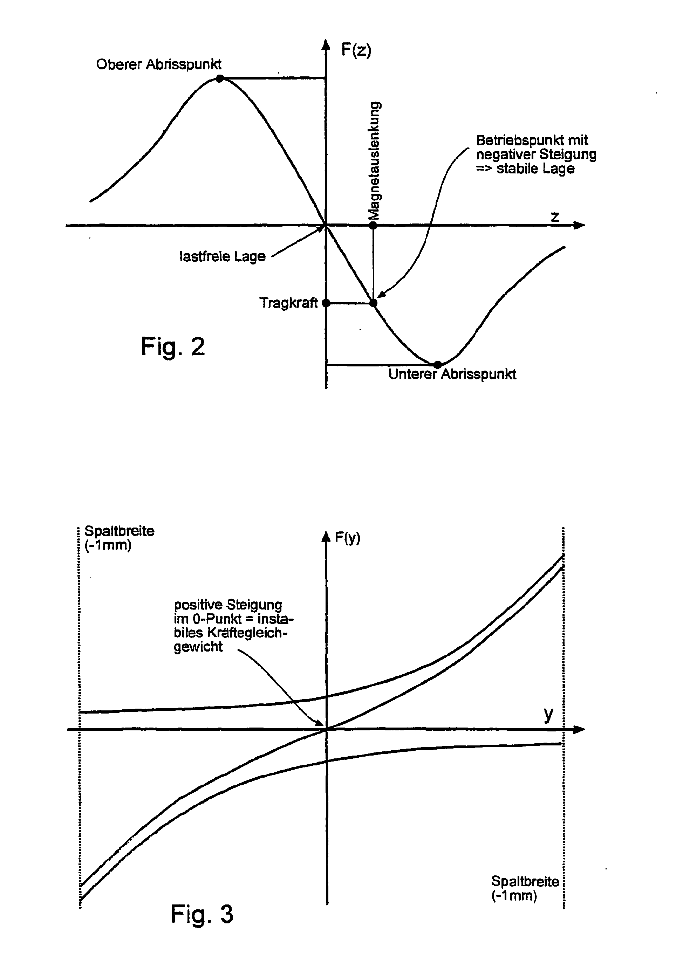

Figur 2 zeigt die Abhängigkeit zwischen der vertikalen Auslenkung der Magnetreihe 1 und der magnetischen Tragkraft in einer Kennlinie, d. h. die Tragkraftkennlinie der Trageinrichtung gemäß der in Figur 1 gezeigten Ausführungsform. Auf der Abszisse ist die vertikale Auslenkung z nach unten, z. B. in mm und auf der Ordinate die korrespondierende erzeugte magnetische Tragkraft F(z), z. B. in Newton, angegeben. Der Verlauf der Tragkraftkennlinie ist durch einen oberen und einen unteren Abrisspunkt gekennzeichnet, die jeweils erreicht werden, wenn die Magnete zwischen den Tragschienen nach oben bzw. nach unten vollständig heraustreten, wie es für den Fall nach unten in Figur 1e gezeigt ist. Wird diese kritische Auslenkung kraftbedingt überschritten, so schwächen sich die Rückstellkräfte durch den zunehmenden Abstand zu den Tragschienen 2a, 2b ab, wodurch in diesen Bereichen kein stabiler Gleichgewichtszustand zwischen der Tragkraft F(z) und der durch die Last bedingten Gewichtskraft F_{g} erreicht werden kann.

In der Praxis kann ein solches Abreißen der Tragkraft F(z) durch die Gewichtskraft F_{g} der Türflügelmasse durch eine mechanische Begrenzung der möglichen Auslenkung der Magnetreihe 1 zuverlässig verhindert werden, wie sie beispielhaft in Figur 1d) gezeigt ist. Hier umfasst das die Tragschienen 2a, 2b aufnehmende und eine horizontale Führung für das Führungselement 3 bietende Gehäuse 6 gleichzeitig zwei jeweils an seinen unteren Enden angeordnete Vorsprünge 6a, 6b, die eine mechanische Begrenzung der möglichen Auslenkung des Tragschlittens 4 und somit der an diesem starr befestigten Magnetreihe 1 in z-Richtung sind.

Zwischen dem oberen Abrisspunkt und dem unteren Abrisspunkt verläuft die Tragkraftkennlinie nahezu linear, wobei bei einer positiven Auslenkung der Magnetreihe 1, d. h. einer Auslenkung nach unten, die durch den am Tragschlitten 4 befestigten Türflügel 5 erfolgt, von dem Ursprung des Koordinatensystemes zwischen vertikaler Auslenkung z der Magnetreihe 1 und magnetischer Tragkraft F(z) bis zu dem unteren Abrisspunkt auf der Tragkraftkennlinie Betriebspunkte mit negativer Steigung durchfahren werden, in denen sich eine jeweilige stabile Lage der Magnetreihe 1 zwischen den Tragschienen 2a, 2b, bedingt durch die auf die Magnetreihe 1 wirkende Gewichtskraft F_{g} und der betragsgleichen, in entgegengesetzte Richtung wirkende magnetische Tragkraft F(z) einstellen kann.

Bei strenger Symmetrie der beschriebenen magnetischen Trageinrichtung um die vertikale Mittelachse (z-Achse), die sowohl von der Anordnung der Trageinrichtung als auch dem mechanischen Führungselement 3 abhängt, heben sich die horizontalen Magnetkraft-Komponenten in Querrichtung, d. h. in y-Richtung, vollständig auf. Verlässt die Magnetreihe 1 toleranzbedingt diese exakte Mittellage, so stellt sich aufgrund unterschiedlich starker Anziehungskräfte zu den beiden Tragschienen 2a, 2b eine auf die Magnetreihe 1 wirkende Querkraft F(y) ein.

Die Figur 3 zeigt für eine Spaltbreite von z. B. -1 mm bis +1 mm einen Querkraftverlauf F(y) in Abhängigkeit von einer seitlichen Verschiebung y der Magnete 1a, 1b, 1c, 1d, der über den ganzen Verlauf eine positive Steigung hat. Das bedeutet, dass im Null-Punkt des Koordinatensystemes, der zur Mittellage der Magnetreihe 1 zwischen den Tragschienen 2a, 2b korrespondiert, ein instabiles Kräftegleichgewicht vorliegt. In allen anderen Punkten des Koordinatensystemes herrscht eine resultierende Querkraft F(y).

Da in der Mittellage nur ein instabiles Kräftegleichgewicht vorliegt, muss das Führungselement 3 eine präzise mechanische Lagerung bieten, die die Magnetreihe 1 während der Fahrbewegung der Magnetreihe 1 in Bewegungsrichtung, d. h. in x-Richtung, exakt mittig zwischen den Tragschienen 2a, 2b führt. Je genauer diese Zentrierung realisiert werden kann, umso geringer sind die resultierende Querkraft F(y) und hiermit verbundene Reibungskräfte der mechanischen Lagerung.

Um die Trageigenschaften zu optimieren, sollte die Magnetbreite, d. h. die Abmessungen der Magnetreihe 1 bzw. von deren Einzelmagneten 1a, 1b, 1c, 1d in y-Richtung, möglichst groß sein, denn eine große Magnetbreite bewirkt eine große Feldstärke, die zu großen Tragkräften führt. Die Magnethöhe, also die Abmessungen der Magnetreihe bzw. von deren Einzelmagneten 1a, 1b, 1c, 1d in z-Richtung, sollte möglichst klein sein, denn kleine Magnethöhen erhöhen die Steifigkeit des Tragkraftfeldes durch Bündelung des Feldes.

Die Höhe der Tragschienen 2a, 2b sollte möglichst klein sein, günstig ist eine Tragschienenhöhe kleiner 1/2 der Magnethöhe, denn die Feldlinien der Dauermagnete werden gebündelt und hierdurch die Steifigkeit des magnetischen Tragsystemes erhöht.

Die Anordnung sollte so gewählt werden, dass die weichmagnetischen Tragschienen 2a, 2b im Gleichgewichtszustand, in dem die magnetische Tragkraft F(z) betragsgleich der durch Belastung der Magnetreihe 1 mit dem Türflügel 5 hervorgerufenen Gewichtskraft F_{g} ist, vertikal unsymmetrisch um die Magnetreihe 1 liegen und die Magnetreihe 1 sollte möglichst kontinuierlich sein, um Rastkräfte in Bewegungsrichtung, d. h. in x-Richtung, zu vermeiden.

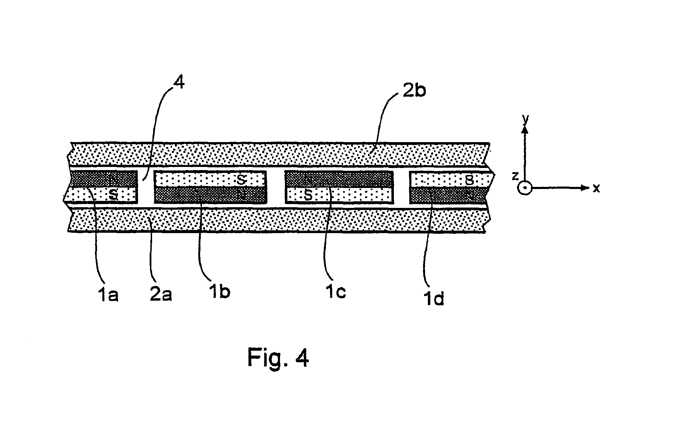

In Figur 4 ist eine Schnittdarstellung einer Aufsicht der in Figur 1a nach einer Schnittlinie A-A gezeigten Trageinrichtung nach der ersten bevorzugten Ausführungsform der Erfindung gezeigt. Es ist zu erkennen, dass die Magnetreihe 1 aus Einzelmagneten 1a, 1b, 1c, 1d besteht, die mit abwechselnder Magnetisierungsrichtung zwischen den beiden seitlich angeordneten Tragschienen 2a, 2b angeordnet sind, die aus einem weichmagnetischen Material bestehen. In dieser Ausführungsform, in der die Tragschienen 2a, 2b den feststehenden Teil der erfindungsgemäßen Trageinrichtung bilden, sind die Einzelmagnete 1a, 1b, 1c, 1d zur Bildung der Magnetreihe 1 an dem beweglichen Tragschlitten 4 befestigt und können zwischen den Schienen 2a, 2b in x- und z-Richtung verschoben werden. Bei einer vertikalen Verschiebung, d. h. einer Verschiebung in z-Richtung, um einen kleinen Weg, ca. 3-5 mm, aus der Null-Lage, d. h. der geometrischen Symmetrielage, ergibt sich, bedingt durch die Verwendung äußerst starker Dauermagnete, z. B. aus Nd-Fe-B, eine erhebliche Rückstellkraft, die zum Tragen eines Schiebetürflügels 5 mit einem Gewicht von ca. 80 kg/m geeignet ist. In der in Figur 4 gezeigten Anordnung, bei der die Dauermagnete 1a, 1b, 1c, 1d mit abwechselnder Magnetisierungsrichtung zwischen den beiden Tragschienen 2a, 2b angeordnet sind, wirkt sich der Feldschluss durch die Tragschienen 2a, 2b bei wechselseitiger Magnetisierungsrichtung der nebeneinander angeordneten Magnete positiv verstärkend aus.

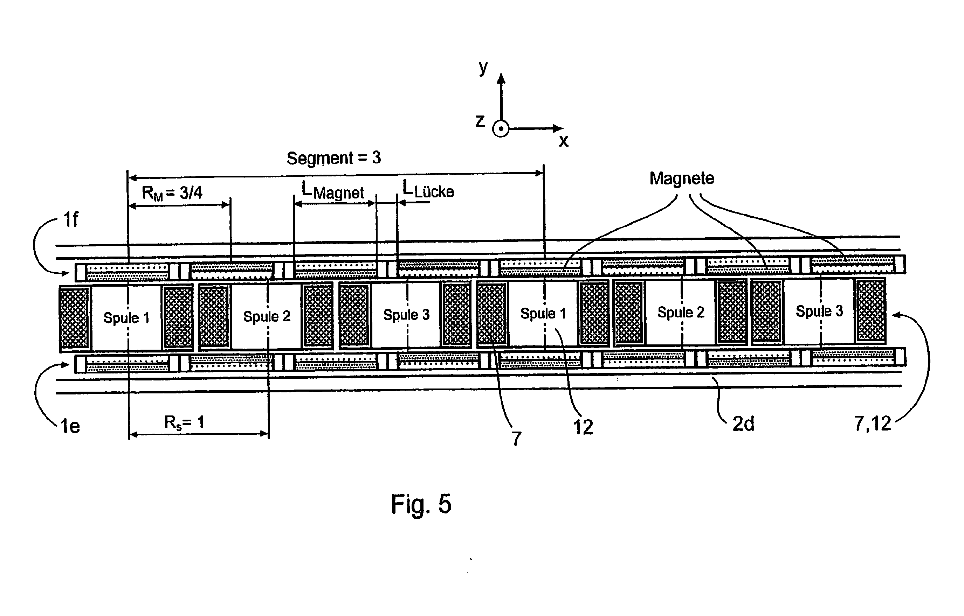

Die Figur 5 zeigt zwei Antriebssegmente einer ersten bevorzugten Ausführungsform des erfindungsgemäß bevorzugt verwendeten Antriebssystemes, hier als kombiniertes magnetisches Trag- und Antriebssystem, in einer geschnittenen Aufsicht, bei der der erfindungsgemäß verwendete magnetische Linearantrieb auf die Magnetreihen 1e, 1f wirkt, die an einem nicht gezeigten Tragschlitten 4 befestigt sind. Die beiden Magnetreihen 1e, 1f weisen jeweils abwechselnd polarisierte Einzelmagnete auf, wobei die Polaritäten der in Querrichtung versetzt angeordneten Einzelmagnete der beiden Magnetreihen gleichgerichtet sind. Zwischen den Magnetreihen 1e, 1f sind Spulen 7 so angeordnet, dass sich ein jeweiliger Spulenkern 12 in Querrichtung, d. h. y-Richtung, erstreckt. Auf der den Spulen 7 mit Spulenkernen 12 abgewandten Seite der Magnetreihe 1 befindet sich jeweils ein Seitenbereich der Tragschiene 2d.

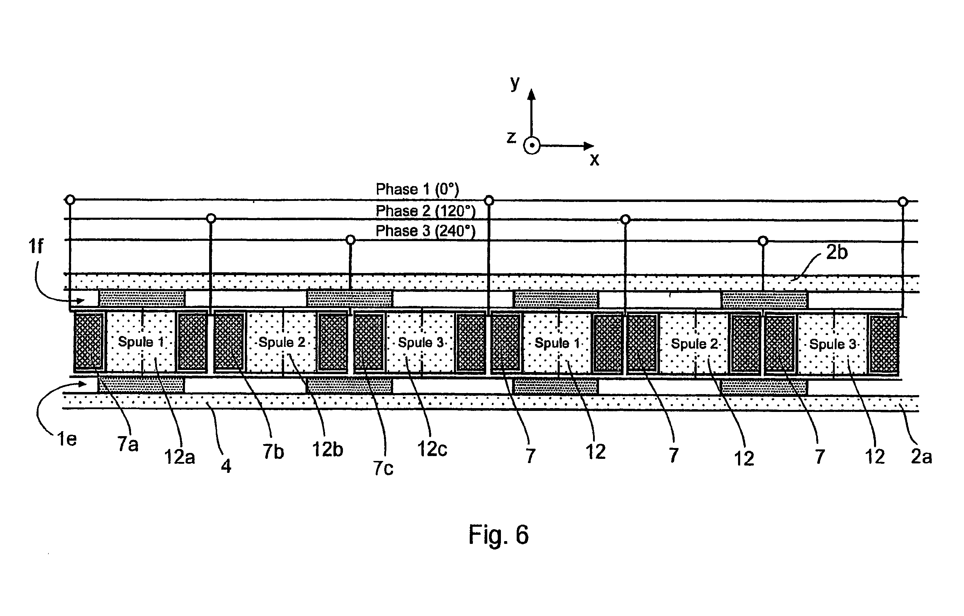

Um einen kontinuierlichen Vorschub der Magnetreihe 1 zu gewährleisten, sind die Stator-Spulen 7 mit ihren jeweiligen Spulenkernen 12 in unterschiedlichen relativen Positionen zum Raster der Dauermagnete 1, 1e, 1f angeordnet. Je mehr unterschiedliche Relativpositionen ausgebildet werden, umso gleichmäßiger lässt sich die Schubkraft über den Verfahrweg realisieren. Da andererseits jede Relativposition einer elektrischen Phase eines für den Linearantrieb benötigten Ansteuersystemes zuzuordnen ist, sollten möglichst wenig elektrische Phasen zum Einsatz kommen. Aufgrund des zur Verfügung stehenden dreiphasigen Drehstromnetzes ist ein dreiphasiges System, wie es beispielhaft in Figur 6 gezeigt ist, sehr kostengünstig aufzubauen.

Hierbei besteht ein jeweiliges Antriebssegment und somit ein Spulenmodul der Linear-Antriebseinheit aus drei Spulen 7a, 7b, 7c, die eine Ausdehnung von drei Längeneinheiten in Antriebsrichtung, d. h. x-Richtung, aufweisen, wobei also zwischen Mittelpunkten benachbarter Spulenkerne 12 ein Raster Rₛ = 1 Längeneinheit liegt. Die Länge eines Magneten der Magnetreihe 1 in Antriebsrichtung und die Länge der zwischen den Einzelmagneten der Magnetreihe 1 liegenden Lücke ist hier so gewählt, dass Länge eines Magneten L_{Magnet} + Länge einer Lücke L_{Lücke} = Magnetraster R_{M} = 3/4 Längeneinheit (= 3/4 Rₛ).

Figur 6 zeigt die Verschaltung der Spulen der in Figur 5 gezeigten beiden Antriebssegmente der erfindungsgemäß bevorzugt verwendeten Linear-Antriebseinheit. Hier ist eine erste Spule 7a mit einem ersten Spulenkern 12a zwischen eine erste Phase und eine zweite Phase eines aus drei Phasen bestehenden Drehstromsystemes angeschlossen, dessen drei Phasen gleichmäßig verteilt sind, also die zweite Phase bei 120° und eine dritte Phase bei 240° liegen, wenn die erste Phase bei 0° liegt. Die in positiver Antriebsrichtung, d. h. +x-Richtung, neben der ersten Spule 7a mit dem Spulenkern 12a liegende zweite Spule 7b mit Spulenkern 12b eines Antriebssegmentes der Linear-Antriebseinheit ist zwischen die zweite Phase und die dritte Phase geschaltet und die in positiver Antriebsrichtung, d. h. +x-Richtung neben der zweiten Spule 7b mit Spulenkern 12b liegende dritte Spule 7c mit Spulenkern 12c ist zwischen die dritte Phase und die erste Phase geschaltet. Neben einem solchen Antriebssegment der Linear-Antriebseinheit liegende Antriebssegmente der Linear-Antriebseinheit sind in gleicher Weise an die drei Phasen des Drehstromsystemes angeschlossen.

Ordnet man dem durch die Dauermagnete gebildeten Polraster, analog zur Anordnung in einem zweipoligen Gleichstrommotor, Phasenwinkel zu, so lassen sich die linearen Spulenanordnungen in einem kreisförmigen Phasendiagramm abbilden. Da sich dieses sowohl magnetisch als Antriebswirkung auf die Dauermagnete als auch elektrisch als Ansteuerung der Spulen interpretieren lässt, kann durch dieses Diagramm der Zusammenhang zwischen Schaltzuständen und Antriebswirkung einheitlich beschrieben werden.

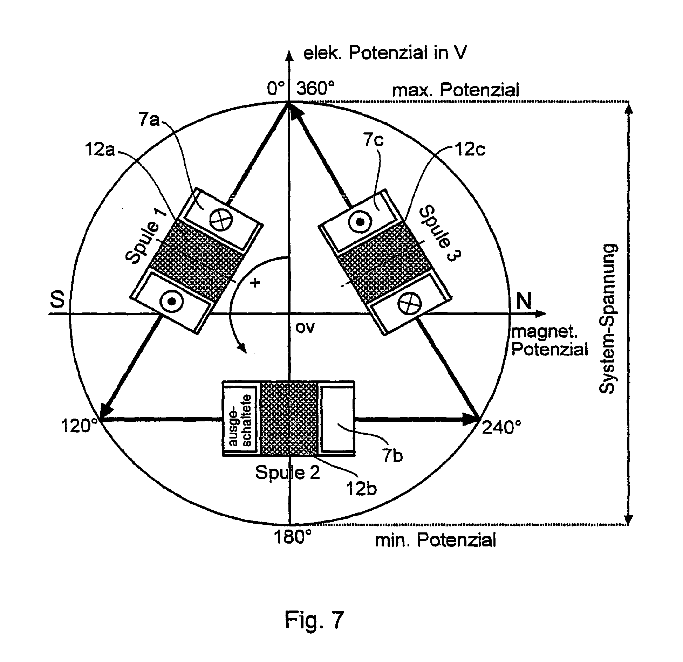

Ein solches kreisförmiges Phasendiagramm mit eingezeichneten Spulen ist in Figur 7 gezeigt. Hier ist auf der Ordinate das elektrische Potential in V und auf der Abszisse das magnetische Potential angegeben. Ein Kreis um den Ursprung dieses Koordinatensystemes, der ein Nullpotential sowohl für das elektrische Potential als auch das magnetische Potential darstellt, repräsentiert die Phasenlagen der an den jeweiligen Spulen anliegenden Spannung, wobei eine 0°-Phasenlage bei dem Schnittpunkt des Kreises mit der positiven Ordinate gegeben ist und sich die Phase im Uhrzeigersinn zu einer 90°-Phasenlage in dem Schnittpunkt des Kreises mit der negativen Abszisse, der das magnetische Potential des Südpols darstellt, eine 180°-Phasenlage in dem Schnittpunkt des Kreises mit der negativen Ordinate, der das minimale Spannungspotential darstellt, einer 270°-Phasenlage in dem Schnittpunkt des Kreises mit der positiven Abszisse, der das magnetische Potential des Nordpols darstellt, bis zu einer 360"-Phasenlage, die gleich der 0°-Phasenlage ist, in dem Schnittpunkt des Kreises mit der positiven Ordinate, der das maximale Spannungspotential darstellt, ändert.

Wie in Figur 6 gezeigt, ist eine Beziehung gegeben, bei der die erste Spule 7a mit Magnetkern 12a zwischen einer 0°-Phasenlage und einer 120°-Phasenlage, die zweite Spule 7b mit Magnetkern 12b zwischen einer 120°-Phasenlage und einer 240°-Phasenlage und die dritte Spule 7c mit Magnetkern 12c zwischen einer 240°-Phasenlage und einer 360°-Phasenlage liegen. Bei Drehstrombetrieb drehen sich nun die Zeiger dieser Spulen entsprechend der Wechselfrequenz des Drehstroms im Gegenuhrzeigersinn, wobei jeweils eine der elektrischen Potentialdifferenz zwischen den auf die Ordinate projizierten Anfangs- und Endpunkten des Zeigers entsprechende Spannung an den Spulen anliegt.

Bei der magnetischen Interpretation des Phasendiagrammes entspricht ein Phasendurchlauf von 180° einer Verschiebung des Läufers um den Abstand zwischen den Mittelpunkten zweier benachbarter Magnete, also dem Magnetraster R_{M}. Durch die abwechselnde Polarisierung der Magnete im Läufer wird bei einer Verschiebung um das Magnetraster R_{M} ein Polwechsel ausgeführt. Nach einem 360°-Phasendurchlauf beträgt die Läuferverschiebung zwei R_{M}. Hierbei befinden sich die Magnete relativ zum Raster Rₛ der Statorspulen wieder in Ausgangsposition, vergleichbar mit einer 360°-Umdrehung des Rotors eines zweipoligen Gleichstrommotores.

Für die elektrische Interpretation des Phasendiagramms wird die Ordinate betrachtet, auf der das anliegende elektrische Spannungspotential dargestellt ist. Bei 0° liegt das maximale Potential, bei 180° das minimale Potential und bei 90° bzw. 270° ein mittleres Spannungspotential an. Wie zuvor erwähnt, werden die Spulen im Diagramm durch Pfeile dargestellt, deren Anfangs- und Endpunkte die Kontaktierungen darstellen. Die jeweils anliegende Spulenspannung kann durch Projektion von Start- und Endpunkt der Pfeile auf der Potentialachse abgelesen werden. Durch die Pfeilrichtung wird die Stromrichtung und hierdurch die Magnetisierungsrichtung der Spule festgelegt.

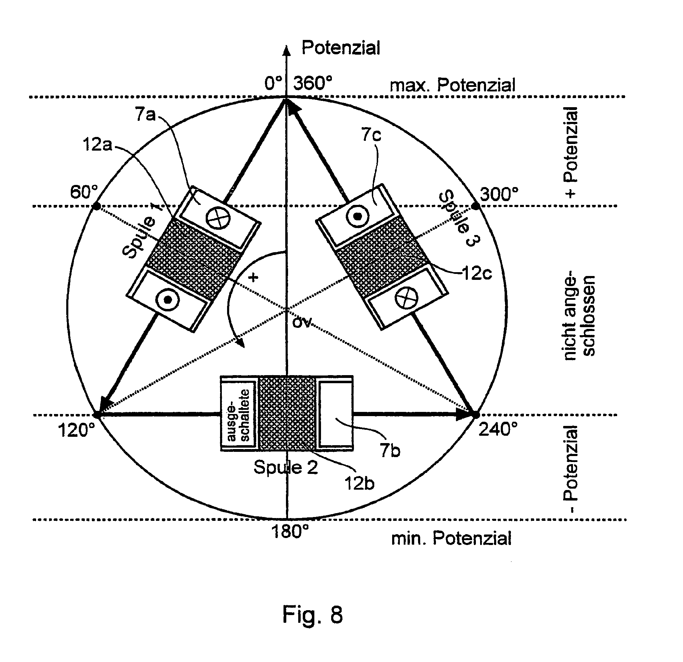

Anstelle einer kontinuierlichen sinusförmigen Spannungsquelle, die ein Phasendiagramm gemäß Figur 7 aufweist, kann aus Kostengründen auch eine Steuerung mit Rechteck-Charakteristik eingesetzt werden. In einem entsprechenden Phasendiagramm, das in Figur 8 gezeigt ist, ist die Rechteck-Charakteristik durch Schaltschwellen dargestellt. Hierbei können die Phasenanschlüsse jeweils die drei Zustände Pluspotential, Minuspotential und potentialfrei einnehmen. Dabei liegt das Pluspotential z. B. in einem Bereich zwischen 300° und 60° und das Minuspotential in einem Bereich von 120° bis 240° an und die Bereiche zwischen 60° und 120° sowie 240° und 300° stellen den potentialfreien Zustand dar, in dem die Spulen nicht angeschlossen sind. Bei der Rechteckspannung-Ansteuerung ist der im Vergleich zur Sinus-Steuerung ungleichmäßigere Schub nachteilig.

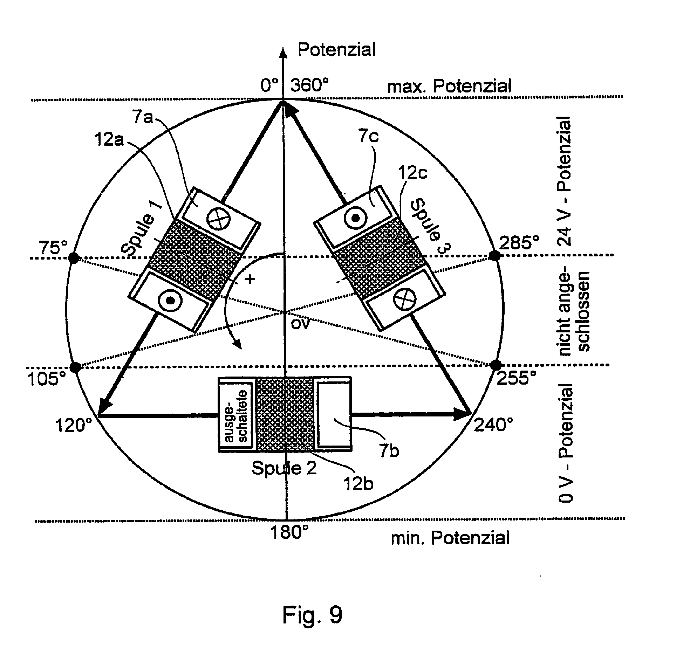

Es lässt sich natürlich noch eine große Zahl weiterer Spulenkonfigurationen und Potentialverteilungen aufbauen, z. B. die in Figur 9 gezeigte Potentialverteilung, bei der ein minimales Potential von 0 V in einem Bereich zwischen 105° und 255°, ein maximales Potential von 24 V in einem Bereich von 285° bis 75° und potentialfreie Bereiche von 75° bis 105° und von 255° bis 285° vorliegen.

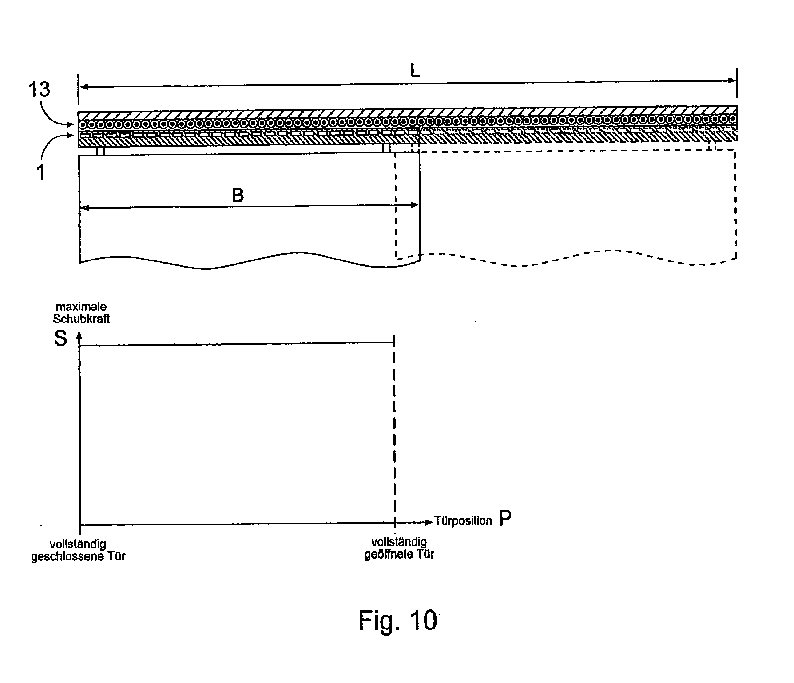

Die Figur 10 zeigt eine Anordnung einer Spulenanordnung bei einer Schiebetür nach dem Stand der Technik. Hier sind die Einzelspulen 7 der Spulenanordnung 13 über den gesamten Verfahrweg L, der etwa der doppelten Türflügelbreite B entspricht, angeordnet, wodurch sich ein konstanter Schubkraftverlauf über den gesamten Türpositionsbereich P ergibt, da auf die wenigstens eine mit dem Türflügel 5 starr verbundene Magnetreihe 1 immer die gleiche Anzahl von Einzelspulen 7 wirkt.

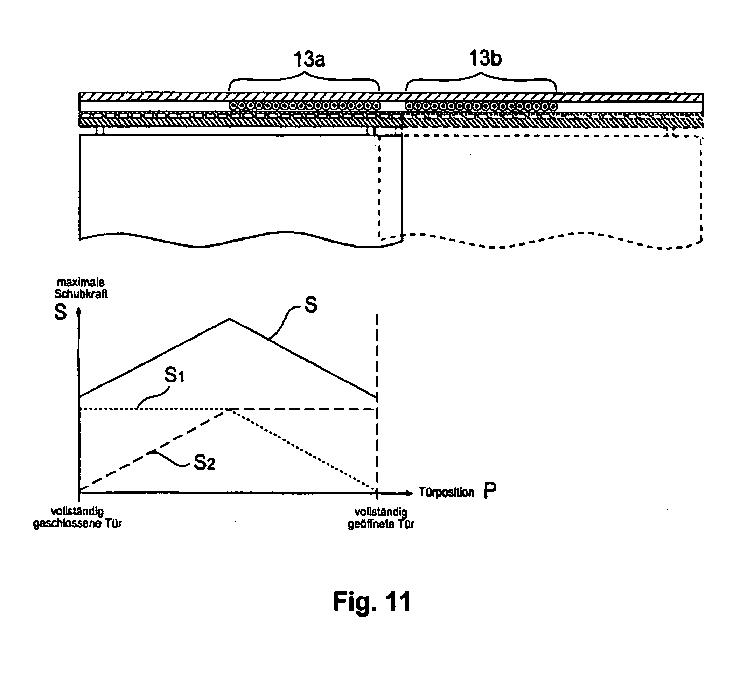

In der Figur 10 wie auch in den nachfolgenden Figuren 11 bis 15 ist im oberen Teil jeweils ein Teil einer Schiebetür, nämlich ihre Aufhängung, insbesondere die Spulenanordnung 13 und wenigstens eine Magnetreihe 1 der Linear-Antriebseinheit über den Verfahrweg L und der obere Teil des Türflügels 5 gezeigt. Im unteren Teil ist die von der Linear-Antriebseinheit erzeugte Schubkraft S über die Türposition P, d. h. die Position der Kante des Türflügels, die beim Verfahren von der geschlossenen Tür zu der geöffneten Tür nachgezogen wird, hier der linken Kante des Türflügels, dargestellt. Jeweils links ist ein vollständig geschlossener Zustand des Türflügels und jeweils rechts ist der Türflügel vollständig geöffnet. Der Verfahrweg entspricht ca. der doppelten Türflügelbreite, da der sich über seine Breite erstreckende Türflügel um ca. eine Türflügelbreite verfahren werden muss, um die Tür vollständig zu öffnen.

Die Figur 11 zeigt eine Anordnung einer Spulenanordnung 13 bei einer Schiebetür nach einer ersten bevorzugten Ausführungsform nach der Erfindung. Hier ist die Spulenanordnung ebenfalls in zwei Gruppen 13a, 13b geteilt, wobei lediglich jeweils die aneinandergrenzenden ca. 2,5 % des Verfahrweges entsprechenden Einzelspulen 7 der jeweiligen Gruppe 13a, 13b entfernt sind, also in der Mitte des Verfahrweges L eine Lücke von ca. 5 % des Verfahrweges besteht. Hierdurch ergibt sich zunächst ein linear ansteigender und dann ein linear abnehmender Schubkraftverlauf S, der sich als Summe der von der linken ersten Gruppe 13a aufgebrachten Schubkraft S1 und der von der rechten zweiten Gruppe aufgebrachten Schubkraft S2 über die Türposition ergibt. Dies ergibt sich, da während der Bewegung des Türflügels auf die wenigstens eine mit dem Türflügel starr verbundene Magnetreihe 1 zunächst eine zunehmende und dann eine abnehmende Anzahl von Einzelspulen 7 der Spulenanordnung 13 wirkt. Durch die Gesamtlänge der Spulenanordnung 13, d. h. die Summe der Einzellängen der beiden Gruppen 13a, 13b der Spulenanordnung 13, unterhalb der Türflügelbreite B, genauer der Länge der wenigstens einen Magnetreihe 1, die hier der Türflügelbreite B entspricht, wird auch in der mittleren Türposition die maximale Schubkraft nicht erreicht.

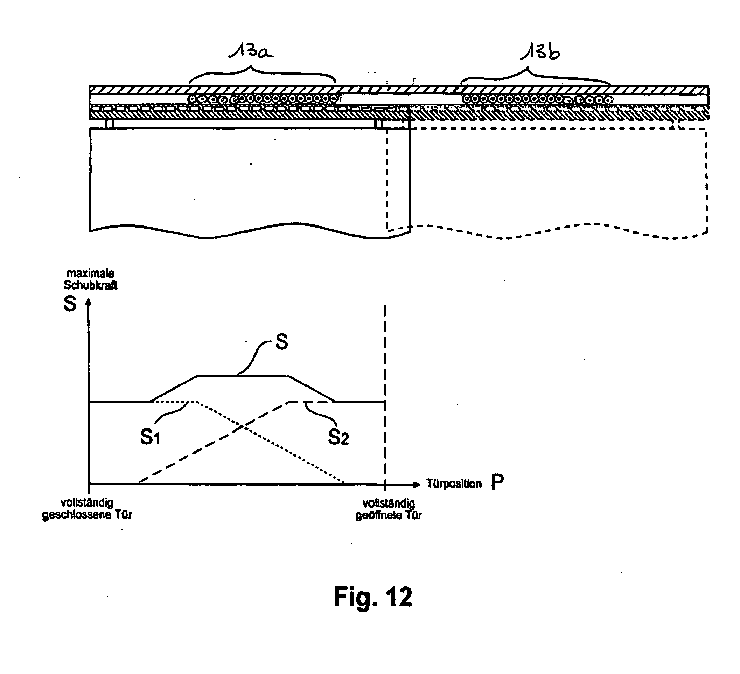

Die Figur 12 zeigt eine Anordnung einer Spulenanordnung 13 bei einer Schiebetür nach einer zweiten bevorzugten Ausführungsform nach der Erfindung. Hier ist die Spulenanordnung ebenfalls in zwei Gruppen 13a, 13b geteilt, wobei im Unterschied zu der ersten bevorzugten Ausführungsform nach der Erfindung lediglich die jeweiligen ca. 25 % des Verfahrweges bildenden Gruppen 13a, 13b so über den Verfahrweg L verteilt sind, dass die ersten und letzten ca. 15 % des Verfahrweges nicht mit einer Spulenanordnung versehen sind und zwischen den beiden Gruppen 13a, 13b ein Abstand von ca. 20 % des Verfahrweges besteht, also im Unterschied zu der ersten bevorzugten Ausführungsform der nach der Erfindung bei gleichlangen Gruppen 13a, 13b in der Mitte des Verfahrweges L eine größere Lücke besteht. Hierdurch ergibt sich eine rampenförmige von der ersten Gruppe 13a erzeugte Schubkraft S1 über die Türposition, die zunächst konstant ist und dann linear abnimmt und eine ebenfalls rampenförmige von der zweiten Gruppe 13b erzeugte Schubkraft S2 über die Türposition, die zunächst linear ansteigend und anschließend konstant ist. Insgesamt ergibt sich ein zunächst konstanter, dann linear ansteigender, dann konstanter, dann linear abfallender und schließlich wieder konstanter Schubkraftverlauf S, der sich als Summe der von der linken ersten Gruppe 13a aufgebrachten Schubkraft S1 und der von der rechten zweiten Gruppe aufgebrachten Schubkraft S2 über die Türposition ergibt. Dies ergibt sich, da während der Bewegung des Türflügels auf die wenigstens eine mit dem Türflügel starr verbundene Magnetreihe 1 zunächst eine konstante, dann eine zunehmende, dann wieder eine konstante, dann eine abnehmende und schließlich wieder eine konstante Anzahl von Einzelspulen 7 der Spulenanordnung 13 wirkt. Durch eine Gesamtlänge der gleichzeitig auf die wenigstens eine Magnetreihe 1 wirkenden Spulenanordnung 13, d. h. die Summe der Einzellängen der beiden Gruppen 13a, 13b der Spulenanordnung 13, die gleichzeitig auf die wenigstens eine Magnetreihe 1 wirkenden, unterhalb der Türflügelbreite B, genauer der Länge der wenigstens einen Magnetreihe 1, die hier der Türflügelbreite B entspricht, wird auch in der mittleren Türposition die maximale Schubkraft nicht erreicht und es ergibt sich eine maximale Schubkraft unterhalb der der durch die erste bevorzugte Ausführungsform erzeugten.

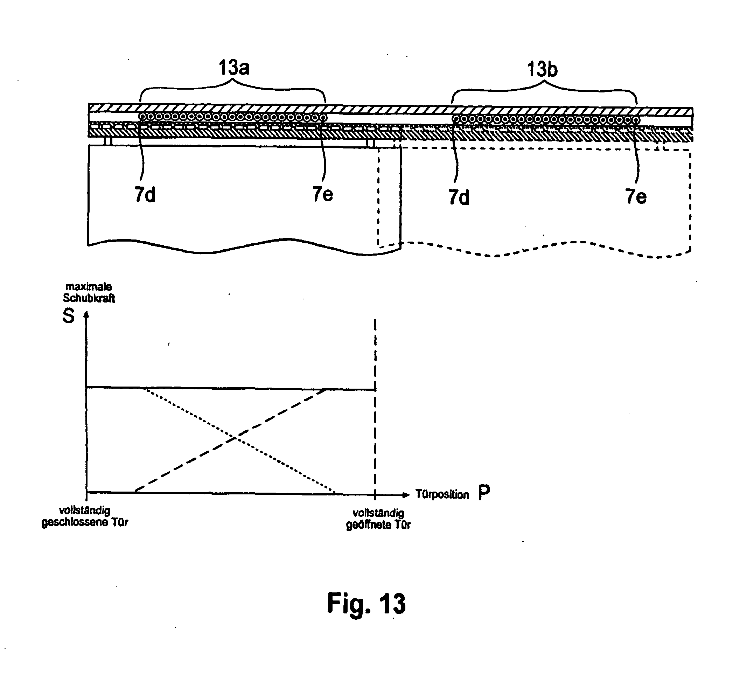

Die Figur 13 zeigt eine Anordnung einer Spulenanordnung 13 bei einer Schiebetür nach einer dritten bevorzugten Ausführungsform nach der Erfindung. Hier ist die Spulenanordnung ebenfalls in zwei Gruppen 13a, 13b geteilt, wobei im Unterschied zu der zweiten bevorzugten Ausführungsform nach der Erfindung lediglich die jeweiligen ca. 25 % des Verfahrweges bildenden Gruppen 13a, 13b so nach vorne und hinten verlängert sind, dass ein Abstand zwischen den jeweiligen ersten Einzelspulen 7d der beiden Gruppen 13a, 13b der Türflügelbreite B entspricht, genauer der Länge der wenigstens einen Magnetreihe 1, die hier der Türflügelbreite B entspricht und ein Abstand zwischen den jeweiligen letzten Einzelspulen 7e der beiden Gruppen 13a, 13b ebenfalls der Türflügelbreite B entspricht, genauer der Länge der wenigstens einen Magnetreihe 1, die hier der Türflügelbreite B entspricht. Die zwischen den beiden Gruppen 13a, 13b bestehende Lücke ist gleich zu der der ersten bevorzugten Ausführungsform. Hierdurch ergibt sich eine rampenförmige von der linken ersten Gruppe 13a erzeugte Schubkraft S1 über die Türposition, die zunächst konstant ist und dann linear abnimmt und eine ebenfalls rampenförmige von der rechten zweiten Gruppe 13b erzeugte Schubkraft S2 über die Türposition, die zunächst linear ansteigend und anschließend konstant ist. Insgesamt ergibt sich ein konstanter Schubkraftverlauf S, der sich als Summe der von der ersten Gruppe 13a aufgebrachten Schubkraft S1 und der von der zweiten Gruppe aufgebrachten Schubkraft S2 über die Türposition ergibt. Dies ergibt sich, da während der Bewegung des Türflügels auf die wenigstens eine mit dem Türflügel starr verbundene Magnetreihe 1 immer eine konstante Anzahl von Einzelspulen 7 der Spulenanordnung 13 wirkt. Durch eine Gesamtlänge der gleichzeitig auf die wenigstens eine Magnetreihe 1 wirkenden Spulenanordnung 13, d. h. die Summe der Einzellängen der beiden Gruppen 13a, 13b der Spulenanordnung 13, die gleichzeitig auf die wenigstens eine Magnetreihe 1 wirkenden, unterhalb der Türflügelbreite B, genauer der Länge der wenigstens einen Magnetreihe 1, die hier der Türflügelbreite B entspricht, wird auch in der mittleren Türposition die maximale Schubkraft nicht erreicht.

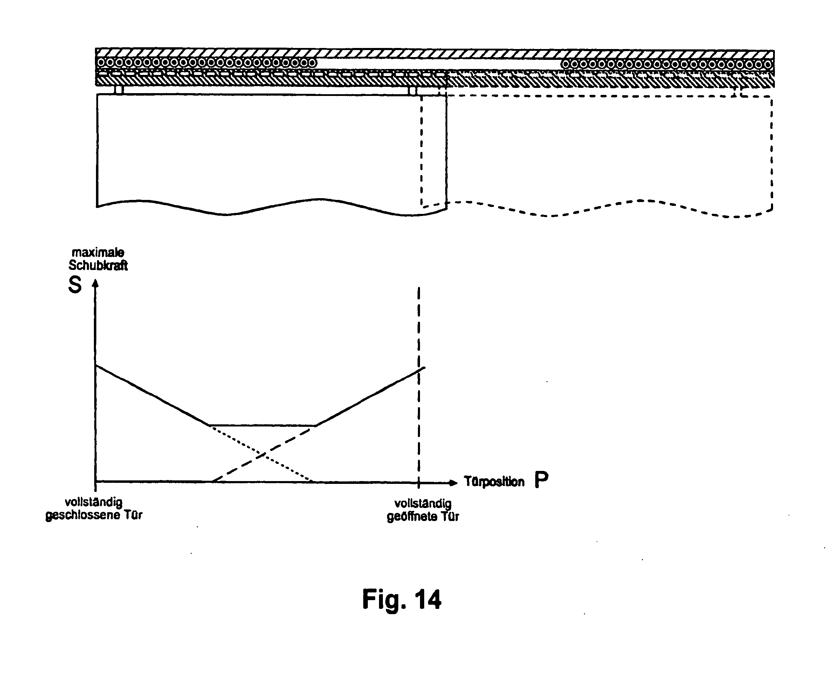

Die Figur 14 zeigt eine Anordnung einer Spulenanordnung 13 bei einer Schiebetür nach einer vierten bevorzugten Ausführungsform nach der Erfindung. Hier ist die Spulenanordnung ebenfalls in zwei Gruppen 13a, 13b geteilt, wobei im Unterschied zu der dritten bevorzugten Ausführungsform nach der Erfindung lediglich die jeweiligen gleichlangen Gruppen 13a, 13b an dem Anfang und dem Ende des Verfahrweges L angeordnet sind, also im Unterschied zu der dritten bevorzugten Ausführungsform nach der Erfindung bei gleichlangen Gruppen 13a, 13b in der Mitte des Verfahrweges L eine größere Lücke besteht. Hierdurch ergibt sich eine linear abfallende von der linken ersten Gruppe 13a erzeugte Schubkraft S1 über die Türposition und eine linear ansteigende von der rechten zweiten Gruppe 13b erzeugte Schubkraft S2 über die Türposition. Insgesamt ergibt sich ein zunächst linear abfallender, dann konstanter und schließlich linear ansteigender Schubkraftverlauf S, der sich als Summe der von der ersten Gruppe 13a aufgebrachten Schubkraft S1 und der von der zweiten Gruppe aufgebrachten Schubkraft S2 über die Türposition ergibt. Dies ergibt sich, da während der Bewegung des Türflügels auf die wenigstens eine mit dem Türflügel starr verbundene Magnetreihe 1 zunächst eine abnehmende, dann eine konstante und schließlich eine zunehmende Anzahl von Einzelspulen 7 der Spulenanordnung 13 wirkt. Durch eine Gesamtlänge der gleichzeitig auf die wenigstens eine Magnetreihe 1 wirkenden Spulenanordnung 13, d. h. die Summe der Einzellängen der beiden Gruppen 13a, 13b der Spulenanordnung 13, die gleichzeitig auf die wenigstens eine Magnetreihe 1 wirkenden, unterhalb der Türflügelbreite B, genauer der Länge der wenigstens einen Magnetreihe 1, die hier der Türflügelbreite B entspricht, wird die maximale Schubkraft nicht erreicht.

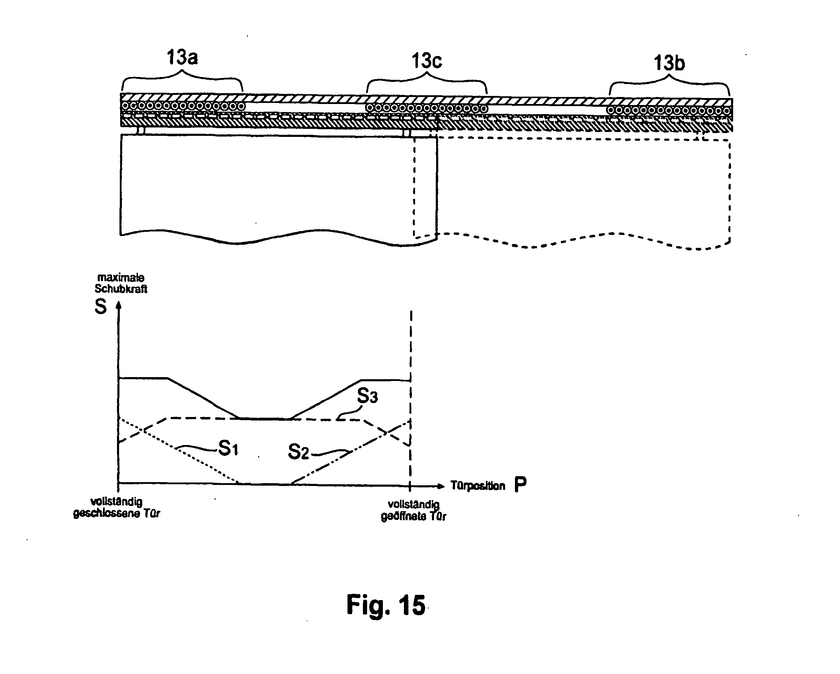

Die Figur 15 zeigt eine Anordnung einer Spulenanordnung 13 bei einer Schiebetür nach einer fünften bevorzugten Ausführungsform nach der Erfindung. Hier ist die Spulenanordnung in drei Gruppen 13a, 13b, 13c mit einer jeweiligen Länge von ca. 20 % des Verfahrweges L geteilt, die mit einem Abstand von 20% des Verfahrweges L zueinander auf diesem angeordnet sind. Hierdurch ergibt sich eine linear abfallende von der linken ersten Gruppe 13a erzeugte Schubkraft S1 über die Türposition, eine linear ansteigende von der rechten zweiten Gruppe 13b erzeugte Schubkraft S2 über die Türposition und eine zunächst linear ansteigende, dann konstante und schließlich linear abfallende von der mittleren dritten Gruppe 13c erzeugte Schubkraft S1 über die Türposition. Insgesamt ergibt sich ein zunächst konstanter, dann linear abfallender, dann konstanter, dann linear ansteigender und schließlich konstanter Schubkraftverlauf S, der sich als Summe der von der ersten Gruppe 13a aufgebrachten Schubkraft S1, der von der zweiten Gruppe aufgebrachten Schubkraft S2 und der von der dritten Gruppe 13c aufgebrachten Schubkraft S3 über die Türposition ergibt. Dies ergibt sich, da während der Bewegung des Türflügels auf die wenigstens eine mit dem Türflügel starr verbundene Magnetreihe 1 zunächst eine konstante, dann eine abnehmende, dann eine konstante, dann eine zunehmende und schließlich eine konstante Anzahl von Einzelspulen 7 der Spulenanordnung 13 wirkt. Durch eine Gesamtlänge der gleichzeitig auf die wenigstens eine Magnetreihe 1 wirkenden Spulenanordnung 13, d. h. die Summe der Einzellängen der beiden Gruppen 13a, 13b der Spulenanordnung 13, die gleichzeitig auf die wenigstens eine Magnetreihe 1 wirkenden, unterhalb der Türflügelbreite B, genauer der Länge der wenigstens einen Magnetreihe 1, die hier der Türflügelbreite B entspricht, wird die maximale Schubkraft nicht erreicht.

Natürlich kann die erfindungsgemäße Schiebetür mit dem erfindungsgemäßen magnetischen Antriebssystem auch so ausgestaltet sein, dass die lediglich vorzugsweise magnetisch gelagerte Trageinrichtung von dem erfindungsgemäßen Antriebssystem getrennt vorgesehen ist.

### Bezugszeichenliste

- 1, 1 e, 1f: Magnetreihe
- 1a-d: Magnet
- 2: Tragelement
- 2a, 2b: Tragschiene
- 3: Führungselement
- 4: Tragschlitten
- 5: Türflügel
- 6: Gehäuse
- 7, 7a-d, 7e: Spule
- 12, 12a-c: Spulenkern
- 13, 13a-c: Spulenanordnung
- L: Verfahrweg
- B: Türflügelbreite
- P: Türpositionsbereich
- S, S1-3: Schubkraft

- L_{Magnet}: Länge eines Magneten
- L_{Lücke}: Länge einer Lücke
- R_{M}: Magnetraster

## Patentansprüche

1. Schiebetür mit einem magnetischen Antriebssystem für mindestens einen Türflügel (5), mit
• einer Linear-Antriebseinheit, die
- mindestens eine mit dem Türflügel (5) starr verbundene und in Antriebsrichtung ortsveränderlich angeordnete Magnetreihe (1; 1e, 1f), deren Magnetisierung in ihrer Längsrichtung in bestimmten Abständen das Vorzeichen wechselt, und
- mindestens eine aus mehreren Einzelspulen (7) bestehende ortsfeste Spulenanordnung (13, 13a-c) aufweist, die bei entsprechender Ansteuerung der Einzelspulen (7) eine Wechselwirkung mit der mindestens einen Magnetreihe (1; 1e; 1f) bewirkt, welche Wechselwirkung Vorschubkräfte hervorruft,
• wobei die ortsfeste Spulenanordnung (13, 13a-c)
- über weniger als 90 % einer Länge eines Verfahrweges (L) der Schiebetür angeordnet ist und
- in wenigstens zwei Gruppen von Einzelspulen (7) unterteilt ist, **dadurch gekennzeichnet, dass**
• die wenigstens zwei Gruppen von Einzelspulen (7) symmetrisch zu der Mitte des Verfahrweges (L) der Schiebetür angeordnet sind, und
• ein Abstand zwischen zwei Gruppen von Einzelspulen (7) so gewählt ist, dass der Anfang der Magnetreihe (1) bei ihrem Verfahren dann einer ersten Einzelspule (7d) einer in Bewegungsrichtung noch zu durchfahrenden Gruppe von Einzelspulen (7) gegenübersteht, wenn das Ende der mindestens einen Magnetreihe (1) einer letzten Einzelspule (7e) einer in Bewegungsrichtung nicht mehr zu durchfahrenden Gruppe von Einzelspulen gegenübersteht.

2. Schiebetür nach Anspruch 1, **dadurch gekennzeichnet, dass** die Anordnung der Spulenanordnung (13, 13a-c) und ihre Aufteilung in Gruppen von Einzelspulen (7) abhängig von einem gewünschten Schubkraftverlauf (S) bestimmt wird, mit dem der Türflügel (5) verfahren werden soll.

3. Schiebetür nach Anspruch 1 oder 2, **dadurch gekennzeichnet, dass** die ortsfeste Spulenanordnung (13, 13a, 13b) am Anfang und am Ende des Verfahrweges (L) der Schiebetür nicht angeordnet ist.

4. Schiebetür nach einem der vorstehenden Ansprüche, **dadurch gekennzeichnet, dass** die ortsfeste Spulenanordnung in der Mitte (13c) des Verfahrweges (L) der Schiebetür angeordnet ist.

5. Schiebetür nach einem der vorstehenden Ansprüche, **dadurch gekennzeichnet, dass** Spulenkerne (12) über den gesamten Verfahrweg (L) angeordnet sind.

6. Schiebetür nach einem der vorstehenden Ansprüche, **dadurch gekennzeichnet, dass** der Verfahrweg (L) der doppelten Türflügelbreite (B) entspricht.

7. Schiebetür nach einem der vorstehenden Ansprüche, **dadurch gekennzeichnet, dass** die ortsfeste Spulenanordnung (13, 13a-c) über weniger als 80 %, vorzugsweise weniger als 75 %, einer Länge eines Verfahrweges (L) der Schiebetür angeordnet ist.

8. Schiebetür nach einem der vorstehenden Ansprüche, **dadurch gekennzeichnet, dass** die mindestens eine Magnetreihe (1, 1e, 1f) aus einem oder mehreren Hochleistungsmagneten, vorzugsweise Seltenerden-Hochleistungsmagneten, weiter vorzugsweise vom Typ NeFeB oder Sm₂Co besteht.

9. Schiebetür nach einem der vorstehenden Ansprüche, **dadurch gekennzeichnet, dass** die Schiebetür als Bogenschiebetür oder Horizontal-Schiebewand ausgebildet ist.

## Claims

1. A sliding door with a magnetic drive system for at least one door leaf (5), having
• a linear drive unit, which
- has at least one row of magnets (1; 1 e, 1f) rigidly connected to the door leaf (5) and being non-stationarily disposed in driving direction, the magnetization thereof reversing the sign in the longitudinal direction at certain intervals, and
- has at least one stationary coil arrangement (13, 13a-c) consisting of several individual coils (7), which, by appropriate activation of the individual coils (7), causes an interaction with the at least one row of magnets (1; 1e; 1f), wherein the interaction generates advance forces,
• wherein the stationary coil arrangement (13, 13a-c)
- is disposed over less than 90% of the length of a travel path (L) of the sliding door, and
- is subdivided into at least two groups of individual coils (7),
**characterized in that**
• the at least two groups of individual coils (7) are symmetrically disposed with regard to the centre of the travel path (L) of the sliding door, and
• a distance between two groups of individual coils (7) is selected such that the beginning of the row of magnets (1), when traveling, is located opposite to a first individual coil (7d) of a group of individual coils (7), which the row of magnets still has to pass in direction of motion, if the end of the at least one row of magnets (1) is located opposite to a last individual coil (7e) of a group of individual coils, which the row of magnets no longer has to pass in direction of motion.

2. A sliding door according to claim 1, **characterized in that** the disposition of the coil arrangement (13, 13a-c) and its subdivision into groups of individual coils (7) is determined as a function of a desired thrust force development (S), with which the door leaf (5) is to be displaced.

3. A sliding door according to claim 1 or 2, **characterized in that** the stationary coil arrangement (13a, 13b) is not disposed at the beginning or at the end of the travel path (L) of the sliding door.

4. A sliding door according to any of the preceding claims, **characterized in that** the stationary coil arrangement (13c) is disposed in the middle of the travel path (L) of the sliding door.

5. A sliding door according to any of the preceding claims, **characterized in that** coil cores (12) are disposed along the entire travel path (L).

6. A sliding door according to any of the preceding claims, **characterized in that** the travel path (L) corresponds to double the door leaf width (B).

7. A sliding door according to any of the preceding claims, **characterized in that** the stationary coil arrangement (13, 13a-c) is disposed along less than 80 %, preferably along less than 75 %, of a length of a travel path (L) of the sliding door.

8. A sliding door according to any of the preceding claims, **characterized in that** the at least one row of magnets (1, 1e, 1f) consists of one or more high-energy magnets, preferably of rare earth high-energy magnets, more preferably of the type NdFeB or Sm₂Co.

9. A sliding door according to any of the preceding claims, **characterized in that** the sliding door is configured as a curved sliding door or as a horizontal sliding wall.

## Revendications

1. Porte coulissante avec un système d'entraînement magnétique pour au moins un vantail de porte (5), comprenant
• un système d'entraînement linéaire, qui
- présente au moins une rangée d'aimants (1 ; 1e, 1f) qui est reliée au vantail de porte (5) de façon rigide et agencée de façon mobile dans la direction d'entraînement, rangée dont la magnétisation change de signe à certains intervalles en direction longitudinale, et
- présente au moins un aménagement de bobines (13, 13a-c) stationnaire consistant en plusieurs bobines individuelles (7), qui, par une activation appropriée des bobines individuelles (7), effectue une interaction avec ladite au moins une rangée d'aimants (1 ; 1e, 1f), ladite interaction causant des forces d'avance,
• l'aménagement de bobines (13, 13a-c)
- étant agencé sur moins de 90 % d'une longueur d'un chemin de déplacement (L) de la porte coulissante, et
- étant subdivisé en deux groupes de bobines individuelles (7),
**caractérisée en ce que**
• lesdits au moins deux groupes de bobines individuelles (7) sont agencés symétriquement par rapport au centre du chemin de déplacement (L) de la porte coulissante, et
• une distance entre deux groupes de bobines individuelles (7) est choisie telle que, lors d'un déplacement, le début de la rangée d'aimants (1) se trouve alors en face d'une première bobine individuelle (7d) d'un groupe de bobines individuelles (7) encore à passer dans le sens de mouvement, si la fin de ladite au moins une rangée d'aimants (1) se trouve en face d'une dernière bobine individuelle (7e) d'un groupe de bobines individuelles qui ne doit plus être passé dans le sens de mouvement.

2. Porte coulissante selon la revendication 1, **caractérisée en ce que** l'agencement de l'aménagement de bobines (13, 13a-c) et sa subdivision en groupes de bobines individuelles (7) sont déterminés en fonction d'un développement d'une force d'avance (5) souhaitée, avec laquelle le vantail de porte (5) est à déplacer.

3. Porte coulissante selon la revendication 1 ou 2, **caractérisée en ce que** l'aménagement de bobines (13a, 13b) stationnaire n'est pas agencé au début et à la fin du chemin de déplacement (L) de la porte coulissante.

4. Porte coulissante selon l'une des revendications précédentes, **caractérisée en ce que** l'aménagement de bobines (13c) stationnaire est agencé au centre du chemin de déplacement (L) de la porte coulissante.

5. Porte coulissante selon l'une des revendications précédentes, **caractérisée en ce que** les noyaux de bobines (12) sont agencés lelong de tout le chemin de déplacement (L).

6. Porte coulissante selon l'une des revendications précédentes, **caractérisée en ce que** le chemin de déplacement (L) correspond à deux fois la largeur du vantail de porte (B).

7. Porte coulissante selon l'une des revendications précédentes, **caractérisée en ce que** l'aménagement de bobines (13, 13a-c) stationnaire est agencé sur moins de 80%, de préférence sur moins de 75% d'une longueur d'un chemin de déplacement (L) de la porte coulissante.

8. Porte coulissante selon l'une des revendications précédentes, **caractérisée en ce que** ladite au moins une rangée d'aimants (1, 1e, 1f) consiste en un ou plusieurs aimants haute performance, de préférence en aimants de terre rare haut performance, et encore plus préféré d'aimants du type NeFeB ou Sm₂Co.

9. Porte coulissante selon l'une des revendications précédentes, **caractérisée en ce que** la porte coulissante est aménagée comme porte coulissante en arc ou cloison coulissante horizontal.
